(19) **Europäisches Patentamt**
**European Patent Office**
**Office européen des brevets**

(11) **EP 3 322 127 A1**

(12) **EUROPEAN PATENT APPLICATION**

(43) Date of publication:
**16.05.2018 Bulletin 2018/20**

(51) Int Cl.:
*H04L 12/24* *(2006.01)*
*H04L 29/06* *(2006.01)*
*H04L 12/26* *(2006.01)*
*H04N 21/2662* *(2011.01)*

(21) Application number: **17201460.7**

(22) Date of filing: **13.11.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **14.11.2016 EP 16382528**

(71) Applicant: **Telefonica Digital España, S.L.U.**
**28013 Madrid (ES)**

(72) Inventors:
• **Dimopoulos, Giorgos**
**28013 Madrid (ES)**
• **Leotandis, Ilias**
**28013 Madrod (ES)**
• **Barlet Ros, Pere**
**28013 Madrid (ES)**

(74) Representative: **Carlos Hernando, Borja**
**Garrigues IP, S.L.P.**
**Hermosilla, 3**
**28001 Madrid (ES)**

(54) **A METHOD AND COMPUTER PROGRAMS FOR IDENTIFYING VIDEO STREAMING QOE FROM NETWORK TRAFFIC**

(57) The method comprises monitoring said network traffic and analyzing features of individual video segments and respective network traffic flows of a video, and inferring Quality of Experience, or QoE, issues related to stalls, average representation quality and representation quality variation switching metrics based on a result of said analysis.

EP 3 322 127 A1

**Description**

Field of the Invention

Present invention generally relates to video streaming techniques. In particular the invention relates to a method and computer programs for identifying video streaming Quality of Experience (QoE) from network traffic, either encrypted or unencrypted.

Background of the Invention

Adaptive streaming and encryption are nowadays the default technologies used by the majority of the popular content providers. The widespread adoption of these new technologies has given rise to a new set of challenges for identifying video QoE issues and has rendered previous solutions obsolete.

Deep Packet Inspection (DPI) solutions for extracting quality metrics, such as the video resolution and stall characteristics, do not work anymore with encrypted traffic. Moreover, adaptive quality switching has introduced new factors that affect the user's experience, i.e. quality switching amplitude and frequency. However, these factors were not included in previous models for video QoE.

These changes in video streaming technologies, have caused a high demand, not only by network operators but also the by research community, for updated tools and methods for detecting and quantifying quality issues.

In traditional HTTP video streaming, the video is downloaded as a single continuous file representing a single quality setting. Moreover, video buffering is employed as an additional measure to compensate for jitter and short-term bandwidth variations. Typically, each video session can be divided into two buffering phases, i.e. the start-up phase and the steady state. During the start-up phase the player will download the first part of the video as fast as possible to quickly fill the buffer and minimize the initial delay before the playback begins.

In contrast to traditional streaming, HTTP Adaptive Streaming (HAS) videos are split on the server in multiple segments, each one corresponding to a few seconds of playback time. Each segment is encoded in a range of different quality profiles that are defined by the content provider. Instead of requesting the entire video, the player performs HTTP requests to fetch consecutive segments. The quality profile of the next segment is determined as a function of the throughput with which the previous segment was downloaded and the available seconds of playback in the buffer. In this way, the representation of the video can change dynamically to adapt to changes in the network and minimize stalls.

Some techniques are known in the field, for instance, scientific document Aggarwal, Vaneet, et al. "Prometheus: toward quality-of-experience estimation for mobile apps from passive network measurements" proposes a machine learning approach to obtain a function that relates passive network measurements to the QoE of applications such as video streaming and VoIP. The models for detecting the QoE of each application are built with traffic from a cellular network using metrics from IP flow records and radio layer statistics.

Besides, the document by M. Z. Shafiq "Tracking Mobile Video QoE in the Encrypted Internet" proposes a methodology for network-side video QoE measurement and monitoring in mobile networks that works with encrypted traffic. It uses only standard radio network statistics and/or TCP/IP header information. The approach achieves 87% accuracy just by observing the first 10 seconds of the video streaming session.

The existing methods and technologies do not provide solutions for identifying the full range of issues that affect both traditional and adaptive streaming video, i.e. stalls, average representation quality and representation quality variation switching.

The work of Aggarwal, Vaneet, et al., uses passive measurements on a mobile network to estimate the video QoE but only stalling is considered as a QoE indicator. Moreover, the system is evaluated only on unencrypted traffic to detect stalling issues with accuracy of 84%.

In the work of M. Z. Shafiq, the quality is evaluated in terms of video engagement, i.e. if a video was watched throughout its duration or if it was abandoned. This is a poor QoE metric as user engagement strongly depends on the content of the video. Additionally, the approach relies only on the first 10 seconds of the video session to infer QoE issues. This however, excludes any events or variations that take place in the remaining part of the video that can be tens of minutes long.

More methods are therefore needed for assessing the different types of impairments that affect the users' QoE from encrypted and/or unencrypted network traffic.

Description of the Invention

To that end, present invention provides a methodology for detecting video streaming QoE issues from network traffic. The proposed methodology allows the detection of different levels of QoE that is caused by three key influence factors, i.e. stalling, the average video quality and the representation quality variation with up to 92% accuracy. The detection of QoE issues can be performed with a minimal number of performance metrics to identify quality issues that are obtained by passively monitoring the network traffic, either encrypted or unencrypted, on a single vantage point, analyzing features of individual video segments and respective network traffic flows of a video.

According to a preferred embodiment, the proposed method comprises performing the following steps:

a) analyzing performance metrics from a transport layer, or TCP, of the network traffic;
b) analyzing variation of video segments size during a video session;
c) analyzing variation of the video segments arrival time during the video session;
d) creating predictive models from said metrics for the stall and average representation quality detection using a supervised machine learning algorithm;
e) creating a predictive model to infer issues related to the representation quality variation switching based on time-series analysis; and
f) applying the created predictive models on the network traffic to infer the QoE issues.

According to an embodiment, the proposed method further comprises using the created predictive models to assess the severity with which said QoE issues affected a user.

According to an embodiment, said metrics comprises a Bandwidth-Delay Product (BDP), packet retransmissions, Bytes-in-Flight (BIF), a Round-Trip Time (RTT), latency and the throughput.

According to an embodiment, step b) is performed by considering a chunk size delta ($\Delta$size) representing the difference in size of consecutive video segments. Besides, step c) can be performed by considering a chunk time delta ($\Delta$t) representing the inter-arrival time of consecutive video segments.

Preferably, the supervised machine learning algorithm comprises a Random Forest algorithm that is trained using a 10-fold cross-validation method.

According to an embodiment, the model of step e) comprises using a Cumulative Sum Control Chart (CUSUM), algorithm to identify variation in the sizes and arrival times of the video segments, the CUSUM algorithm comprising receiving a standard deviation of the $\Delta$size $\times$ $\Delta$t product as input.

Other embodiments of the invention that are disclosed herein include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Detailed Description of Preferred Embodiments

The following definitions will be considered:

- Stalls: Whenever the network throughput is not sufficient for the content to be downloaded faster than the rate that it is consumed, the buffer is depleted and the playback is forced to pause until more data are downloaded and the buffer is filled again. Present invention preferably measures the stalls using the Rebuffering Ratio that is expressed as the time spent stalling over the total duration of the video session.
- Average Representation Quality: The average quality can be applied only to HAS video sessions, since only in these cases quality representation changes may occur. Present invention preferably calculates the average representation quality as the average of all the individual qualities of the segments belonging to a video session.
- Representation Quality Variation: Another factor that affects the QoE of adaptive video streaming is the changes in quality variation. The variation in this case has two dimensions, the frequency of the changes and their amplitude. The frequency is the absolute number of changes that occurred in a video session, while the amplitude corresponds to the difference in magnitude between two consecutive qualities.

According to a preferred embodiment, the proposed method firstly involves the development and testing of the detection framework with unencrypted data. As soon as it is verified that the constructed models can leverage a cleartext dataset, the method can proceed to test the framework with data from encrypted video streams. As previously detailed, there are three main types of impairments that may cause the degradation of poor video QoE, the frequency and duration of stalls, the session's Average Representation Quality and the Representation Quality Variation. The initial delay is not considered as part of the proposed video QoE model given its small contribution on the overall user experience.

Following, the process of identifying from the limited number of metrics that are offered by the encrypted traffic, those that are the most significant for creating predictive models to detect each of the three types of impairments will be described. An important part of this process is the feature construction that allows the generation of new more powerful features from the already existing ones. Next, it will be showed that there is a different set of metrics that better describes each type of impairment and contributes more information to the detection model. In order to generate predictive models for detecting the level of stalling and the average representation, the proposed method preferably uses a Machine Learning (ML) algorithm. According to an embodiment, the Random Forest algorithm and 10-fold cross-validation are used.

Stall Detection.-

Feature Construction: Whenever there is an outage on the player's buffer that results in a stall, the player will request small chunks that can be downloaded much faster so that the buffer will be filled as soon as possible and the video playback can resume. Then the size of the chunks will gradually increase and remain at a maximum value during the steady state as long as no further issues occur. Therefore, accuracy of the stall detection model is significantly improved by including the sizes of the chunks in the feature set. After all the required features have been generated, the dataset is then split into sessions without stalls and sessions where at least one stall has occurred. The information regarding the number of stalls observed during a video session and their duration, is the ground truth that is extracted from the meta-data of URIs.

Labeling: Next, the proposed method uses the information from the ground truth to label the data and create a predictive model. To do this, first the method calculates the re-buffering ratio (RR) for each video session as the ratio of the sum of the duration $t_{stall\_k}$ of each of the total K stalls over the duration of the entire session $t_{total}$ (eq. 1)

$$RR = \frac{\sum_{k=1}^{K} t_{stall\_k}}{t_{total}}$$

The sessions are then labeled according to the rule below. The definition of three levels of stalling, i.e. no stalling, mild and severe, allows a more detailed view of the degree to which the stalls affect the user.

$$Stall\ labels : \begin{cases} \text{"no stalling"} : & RR = 0 \\ \text{"mild stalling"} : & 0 > RR \geq 0.1 \\ \text{"severe stalling"} : & RR > 0.1 \end{cases}$$

Feature Selection: The method then proceeds to apply Feature Selection (FS) using the Correlation-based Feature Subset Selection (CfsSubsetEval) with the Best First search algorithm to reduce the number of features from 70 to the following four, BDP mean, packet re-transmissions max, chunk size min and the chunk size standard deviation. The output of the feature selection algorithm reveals that there are three important factors that are correlated with stalling, BDP which is equivalent to throughput, number of retransmissions and chunk size. The limited throughput and increased number of retransmitted packets are Quality of Service (QoS) metrics which are performance indicators of congested networks and/or networks with limited bandwidth where stalling is more likely to occur.

Training and Testing the Predictive Model: In order to avoid biasing the results during the test phase, the method can balance the number of instances among the three classes before training the classifier. The instances in the classes are then restored to their original numbers for testing. Overall, the classifier is able to make predictions with 93.5% accuracy.

Average Representation Quality.-

Feature Construction: In order to detect the average representation of videos with higher accuracy, in addition to the 10 features that are already available in the dataset, the method constructs five additional feature, i.e. the chunk average size, the chunk size delta, the chunk time delta, the average throughput and the throughput cumulative sum. The chunk resolution is only used for the ground truth and labeling of the instances and not for the construction of the predictive model. Hence, a total of 14 features are had from which the following statistics, minimum, mean, maximum, std. deviation and 5th, 10th, 15th, 20th, 25th, 50th, 75th, 80th, 85th, 90th and 95th percentiles can be extracted. As a result, the total number of features the method end ups with is equal to 210. The chunk average size is calculated preferably from the sizes of all the individual chunks in a video. The size of a chunk has a strong correlation with the respective quality of the video segment. The chunk size delta represents the difference in the size of consecutive chunks while the chunk time delta corresponds to the inter-arrival time of video chunks. These parameters are indicators of representation switches that in turn affect the average representation of the session.

Labeling: For the detection of the average representation of a video session, the method categorizes the videos in three main categories based on their average resolution, low (LD), standard (SD) and high definition (HD). Given that in the dataset all the observed resolutions take only a few standard values, i.e. 144p, 240p, 360p, 480p, 720p and 1080p, the method, according to an embodiment, labels all videos with resolutions 144p and 240p as LD, 360p and 480p as SD and all videos with higher resolution as HD. In the dataset 57% of the videos have LD average quality, 38% have SD quality and only 5% have HD. This is an expected finding in the case where videos are streamed using limited mobile data plans and on handheld devices that often come with smaller screens which leads users to opt for LD and SD video qualities. Moreover, the method also considers the cases where there are representation changes during the playback. For these videos the method calculates the average representation $\mu$ from the resolutions of all the segments. The instances in the dataset are labeled, according to an embodiment, following the rule below for calculating the Representation Quality (RQ):

$$RQ = \begin{cases} HD: & \mu > 480 \\ SD: & 480 \geq \mu \geq 360 \\ LD: & \mu < 360 \end{cases}$$

Feature Selection: The FS is again performed with the aid of CfsSubsetEval and Best First. After the selection there are 15 features remaining out of the initial 210. These features are listed in the table below, ranked by their respective information gain. It can be observed that statistics derived from the chunk size are the ones with the highest rank and represent the vast majority of the 15 features. This is a meaningful and expected result since the chunk sizes are highly correlated with the different representation qualities. Moreover, the list of features also contains the BDP and the BIF that are proportional to the amount of bytes that can be delivered by the network but also the throughput cusum which is related to the throughput variations throughout the video session.

| info. gain | feature |
|---|---|
| 0.41 | chunk size 75% |
| 0.39 | chunk size 85% |
| 0.38 | chunk size 90% |
| 0.37 | chunk size 50% |
| 0.33 | chunk size max |
| 0.32 | chunk avg size mean |
| 0.22 | BIF avg max |
| 0.21 | cumsum throughput min |
| 0.2 | chunk $\Delta$size max |
| 0.19 | chunk size std |
| 0.16 | chunk $\Delta$size std |
| 0.15 | chunk $\Delta t$ 25% |
| 0.06 | BDP 90% |
| 0.05 | BIF maximum min |
| 0.03 | RTT minimum min |

Training and Testing the Predictive Model: The model to predict the average representation quality is again built using ML algorithm and Random Forest. The training is done with balanced classes and then the trained model is tested on the entire set. The obtained overall accuracy in this case is 84.5%.

Representation Quality Variation Switch Detection.-

Filtering: During the start-up phase, many content providers employ a fast start mechanism that allows them to fill the playout buffer and start the playback as fast as possible, effectively reducing the start-up delay. This short initial part of a video session may have very different characteristics in terms of segment sizes, inter-segment arrival times and throughput when compared to the much longer steady phase. To reduce the noise introduced by the start-up phase in the detection of resolution variations, the method preferably removes the first ten seconds of all video sessions in the dataset.

Given that this initial section represents a very small fraction of the entire video session (the average session duration is approximately 180 seconds), the method can safely remove it to reduce the noise introduced by the start-up phase while maintaining more than 95% of the session.

Labeling: In order to build a model for quality switching detection, it is necessary to first quantify the switches in terms of frequency and amplitude. To this end, the method defines two metrics, the time spent in each representation $t_r$, the frequency of representation switches $F$ and the switch amplitude $A$.

The switching frequency F is simply calculated as the total number of switches that were observed in a video. The lower the value this metric has, the better the quality of the corresponding video is.

Finally, the equation below which is based on the work of Yin et al., expresses the switch amplitude $A$ as the normalized sum of all the amplitudes of representation switches between consecutive segments $r_k$ and $r_{k+1}$. Again, A is analogous to the degradation of QoE since large representation changes which lead to poor QoE will return higher values of $A$

$$A = \frac{1}{K-1} \sum_{k=1}^{K-1} |r_{k+1} - r_k|$$

Change Detection: During the study of the sessions with many representation changes, it is observed that whenever the adaptive algorithm enforces a change in the representation of the video, a new start-up phase is initiated for the new representation. During this phase, the size and inter-arrival times of the segments are reduced significantly until a certain threshold in the playout buffer has been reached and the video download returns to the steady phase. The most suitable approach to detect representation changes is to perform a time-series analysis. This method allows the identification of abrupt changes in the values of different metrics in the dimension of time that are correlated with the switches of representations.

In more detail, the analysis of video sessions with quality switches performed by the proposed method showed that whenever a change in resolution takes place, a new start-up phase is initiated in order to fill the buffer with data from the new representation as fast as possible. This phase is characterized by video segments with small sizes and small inter-arrival times which will increase gradually until the steady state is reached once again.

The metric which better captures the changes in both the size and the inter-arrival of the video segments it is found to be the product $\Delta$size $\times$ $\Delta$t. Specifically, the multiplication of the two parameters will combine but at the same time emphasize the effects of each one. Therefore, for each video session in the dataset, the method calculates a new time series where each point corresponds to the aforementioned product.

While there are many tools and algorithms for detecting abrupt changes in a time series, the proposed method preferably uses the Cumulative Sum Control Chart (CUSUM) that was developed by E.S. Page. CUSUM is a change detection monitoring technique allowing the detection of shifts from the mean of a given sample of points in a time series. When a point exceeds an upper or lower threshold then a change is found. In the present case, instead of thresholds the method preferably uses the standard deviation of the output of the change detection algorithm. The standard deviation is capable of capturing the magnitude of the changes that occurred and is an indicator of high variance.

The proposed invention may be implemented in hardware, software, firmware, or any combination thereof. If implemented in software, the functions may be stored on or encoded as one or more instructions or code on a computer-readable medium.

Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media. Any processor and the storage medium may reside in an ASIC. The ASIC may reside in a user terminal. In the alternative, the processor and the storage medium may reside as discrete components in a user terminal.

As used herein, computer program products comprising computer-readable media including all forms of computer-readable medium except, to the extent that such media is deemed to be non-statutory, transitory propagating signals.

The scope of the present invention is defined in the following set of claims.

**Claims**

1. A method for identifying video streaming QoE from network traffic, the method comprising monitoring said network traffic and analyzing features of individual video segments and respective network traffic flows of a video, and inferring Quality of Experience, or QoE, issues related to stalls, average representation quality and representation quality variation switching metrics based on a result of said analysis.

2. The method of claim 1, comprising performing the following steps:

   a) analyzing performance metrics from a transport layer, or TCP, of the network traffic;
   b) analyzing variation of video segments size during a video session;
   c) analyzing variation of the video segments arrival time during the video session;
   d) creating predictive models from said metrics for the stall and average representation quality detection using a supervised machine learning algorithm;
   e) creating a predictive model to infer issues related to the representation quality variation switching based on time-series analysis; and
   f) applying the created predictive models on the network traffic to infer the QoE issues.

3. The method of claim 2, wherein step f) further comprises using the created predictive models to assess the severity with which said QoE issues affected a user.

4. The method of previous claims, wherein said metrics of step a) comprises a Bandwidth-Delay Product, or BDP, packet retransmissions, Bytes-in-Flight, or BIF, a Round-Trip Time, or RTT, latency and throughput.

5. The method of previous claims, wherein step b) comprises performing said analyzing by considering a chunk size delta ($\Delta$size) representing the difference in size of consecutive video segments.

6. The method of previous claims, wherein step c) being performed by considering a chunk time delta ($\Delta$t) representing the inter-arrival time of consecutive video segments.

7. The method of previous claims, wherein said algorithm comprises a Random Forest algorithm trained using a 10-fold cross-validation method.

8. The method of previous claims, wherein the predictive model of step e) comprises using a Cumulative Sum Control Chart, or CUSUM, algorithm to identify variation in the sizes and arrival times of the video segments, the CUSUM algorithm comprising receiving a standard deviation of the $\Delta$size $\times$ $\Delta$t product as input.

9. The method of previous claims, wherein the network traffic comprises encrypted or unencrypted traffic.

10. A computer program product comprising software code instructions that when executed on at least one processor of a computer system are configured to implement a method according to any of claims 1 to 9.

Europäisches
Patentamt

European
Patent Office

Office européen
des brevets

# EUROPEAN SEARCH REPORT

Application Number

EP 17 20 1460

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MOLDOVAN CHRISTIAN ET AL: "YouTube Can Do Better: Getting the Most Out of Video Adaptation", 2016 28TH INTERNATIONAL TELETRAFFIC CONGRESS (ITC 28), ITC PRESS, vol. 3, 12 September 2016 (2016-09-12), pages 7-12, XP033039215, DOI: 10.1109/ITC-28.2016.309 [retrieved on 2017-01-06] * abstract; figure 3 * * page 8, lines 41-23 * * page 8, lines 13-20, paragraph III. METHODOLOGY * * page 10, paragraph A. Relationship Between Quality and Scaling * | 1-10 | INV. H04L12/24 H04L12/26 H04L29/06 H04N21/2662 |
| A | WU TINGYAO ET AL: "Network-based video freeze detection and prediction in HTTP adaptive streaming", COMPUTER COMMUNICATIONS, ELSEVIER SCIENCE PUBLISHERS BV, AMSTERDAM, NL, vol. 99, 18 August 2016 (2016-08-18), pages 37-47, XP029894643, ISSN: 0140-3664, DOI: 10.1016/J.COMCOM.2016.08.005 * abstract; figure 3 * * paragraphs [02.1], [03.2], [4.4.1] * | 1-10 | |

-/--

TECHNICAL FIELDS
SEARCHED (IPC)

H04L
H04N

The present search report has been drawn up for all claims

| Place of search | Date of completion of the search | Examiner |
|---|---|---|
| Munich | 1 February 2018 | Fantacone, Vincenzo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 17 20 1460

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZAHRAN AHMED H ET AL: "ARBITER: Adaptive rate-based intelligent HTTP streaming algorithm", 2016 IEEE INTERNATIONAL CONFERENCE ON MULTIMEDIA & EXPO WORKSHOPS (ICMEW), IEEE, 11 July 2016 (2016-07-11), pages 1-6, XP032970846, DOI: 10.1109/ICMEW.2016.7574709 [retrieved on 2016-09-22] * abstract * * page 2, paragraph ARBITER Design * * page 5, last paragraph * ----- | 1-10 | |
| A | TAVAKOLI SAMIRA ET AL: "About subjective evaluation of adaptive video streaming", VISUAL COMMUNICATIONS AND IMAGE PROCESSING; 20-1-2004 - 20-1-2004; SAN JOSE,, vol. 9394, 17 March 2015 (2015-03-17), pages 939407-939407, XP060050776, DOI: 10.1117/12.2076387 ISBN: 978-1-62841-730-2 * the whole document * ----- | 1-10 | TECHNICAL FIELDS SEARCHED (IPC) |

The present search report has been drawn up for all claims

| Place of search | Date of completion of the search | Examiner |
|---|---|---|
| Munich | 1 February 2018 | Fantacone, Vincenzo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AGGARWAL, VANEET et al.** *Prometheus: toward quality-of-experience estimation for mobile apps from passive network measurements*

- **M. Z. SHAFIQ.** *Tracking Mobile Video QoE in the Encrypted Internet*